# EUROPÄISCHE PATENTSCHRIFT

(11) **EP 3 303 100 B1**
(45) Veröffentlichungstag und Bekanntmachung des Hinweises auf die Patenterteilung: **20.01.2021**
(21) Anmeldenummer: 16726820.0
(22) Anmeldetag: 20.05.2016
(51) Int. Cl.: B62D 7/14, F15B 20/00

(54) **HYDROSTATISCHE STELLSCHALTUNG SOWIE DEREN VERWENDUNG**
HYDROSTATIC POSITIONING CIRCUIT AND ITS USE
CIRCUIT DE POSITIONEMENT HYDROSTATIQUE ET SON UTILISATION

(30) Priorität: 28.05.2015 DE 102015108475; 29.05.2015 DE 102015108577; 15.06.2015 DE 102015109513
(43) Veröffentlichungstag der Anmeldung: 11.04.2018
(73) Patentinhaber: Weber-Hydraulik GmbH, 74363 Güglingen (DE)
(72) Erfinder: NAUMANN, Ralf, 74397 Pfaffenhofen (DE); WINKLER, Torsten, 74397 Pfaffenhofen (DE); ZATRIEB, Jacek, 74363 Güglingen (DE); WILHELMUS DE ZAAIJER, Richard Johannes, 4041 AH Kesteren (NL)
(74) Vertreter: Lemcke, Brommer & Partner Patentanwälte Partnerschaft mbB
(86) Internationale Anmeldenummer: PCT/EP2016/061442
(87) Internationale Veröffentlichungsnummer: WO 2016/188906

(56) Entgegenhaltungen:
- EP-A1- 0 225 773
- EP-A1- 0 334 723
- DE-A1- 3 811 312
- DE-A1-102004 029 409

## Beschreibung

### Technisches Gebiet

Die vorliegende Erfindung betrifft eine hydrostatische Stellschaltung gemäß dem Oberbegriff des Anspruchs 1.

### Stand der Technik

Derartige Stellschaltungen sind zum Beispiel in der Druckschrift EP 2 727 797 A1 bzw. in der Druckschrift EP 2 728 203 A2 offenbart.

In der EP 2 728 203 A2 ist eine vom Lenkzylinder über Rückschlagventile zum Tank führende Rücklaufleitung mit einem elektrisch gesteuerten Magnetventil versehen, das in seiner stromführenden Betriebsstellung die Rücklaufleitung zum Tank hin sperrt und in seiner stromlosen Stellung aufgrund der Kraft einer Feder in seine stromlose Betriebsstellung geschaltet wird, in der die Rücklaufleitung geöffnet ist.

Dem Magnetventil nachgeschaltet ist ein zum Tank hin sperrendes und in seiner anderen Schaltstellung öffnendes, elektromagnetisch in Abhängigkeit von einer Umgebungsbedingung in eine der beiden Schaltstellung gesteuert gebrachtes, gerastetes Umschaltventil, das bei Stromausfall in der davor eingenommenen Schaltstellung verbleibt und damit einen Fail safe-Modus der Lenkung sicherstellt.

Bei der aus der EP 2 728 203 A2 bekannten Lösung behält die Lenkung im Fehlerfall ihren bisherigen Modus, vorausgesetzt sie befindet sich im Augenblick des Auftretens des Fehlers in ihrer Mittelstellung, oder schaltet vom Lenkmodus in den Nachlaufmodus um; in diesem Fall besteht nachfolgend keine Möglichkeit, die Lenkung in die Mittelstellung zu bringen.

In der Druckschrift DE 102 45 618 A1 ist ein Lenksystem offenbart, bei dem jeder der Lenkachsen zwei Lenkzylindern und ein Zentrierzylinder zugeordnet sind, wobei dem Zentrierzylinder Sperrventile zugeordnet sind. Die Sperrventile sind über ein Wegeventil derart hydraulisch ansteuerbar, dass sie im Fehlerfall schließen, so dass die Lenkachsen nicht weiter auslenkbar sind. Die Lenkzylinder und der Zentrierzylinder sind über jeweils ein Sicherheitsventil ansteuerbar, das im Bedarfsfall den Zentrierzylinder derart beaufschlagt, dass die Lenkachse in die neutrale Stellung zurückführbar ist, während die Lenkzylinder nicht mehr in eine ausgelenkte Position hin beaufschlagt sind.

Bei der aus der DE 102 45 618 A1 bekannten Lösung ist es zwar möglich, nach Auftreten des Fehlerfalls die Achse in die Mittelstellung zu bringen, vorausgesetzt das übrige System ist immer noch intakt und die dazu erforderliche Energie steht zur Verfügung; diese Lösung ist jedoch sehr aufwändig aufgebaut und damit fehleranfällig.

Die Schrift DE 10 2004 029409 A1 zeigt eine druckmittelbetätigte Stelleinrichtung, insbesondere für eine Fahrzeuglenkvorrichtung, mit einem doppeltwirkenden Hydraulikzylinder, dessen Druckräume zur Auslenkung der Kolbenstange von einer reversierenden Hydraulikpumpe druckbeaufschlagt werden können.

Aus der EP 0 225 773 A1 ist ein Lenkungssystem für Fahrzeuge mit einem hydraulischen Aktuator bekannt. Dessen beide Druckkammern sind über ein druckgesteuertes Bypassventil miteinander verbunden, welches im Normalzustand gesperrt ist. Im Fehlerfall schaltet die Hydraulikpumpe ab, sodass der Druck an dem Bypassventil nachlässt und dieses in eine Öffnungsstellung versetzt wird. In der Öffnungsstellung sind beide Kammern des Hydraulikaktuators miteinander verbunden, wodurch der in eine Richtung ausgelenkte Kolben des Aktuators unter Krafteinwirkung einer Rückstellfeder in seine Mittelstellung zurückbewegt wird.

Die DE 38 11 312 A1 zeigt einen doppeltwirkenden Arbeitszylinder, welcher über eine Fehlerschaltung verfügt. Im Fehlermodus kann der ausgefahrene Kolben wahlweise in der ausgefahrenen Stellung arretiert oder in seine Mittelstellung zurückgefahren werden. Der Arbeitszylinder verfügt hierzu über eine zusätzliche Bohrung im Bereich der Mittelstellung des Stellelementes, die je nach Auslenkung des Kolbens mit einer der beiden Druckkammern des Zylinders verbunden wird. Im Fehlerfall wird ein Rückschlagventil geöffnet, sodass Hydraulikflüssigkeit aus der jeweiligen Kammer über die zusätzliche Bohrung zurück in den Tank strömen kann. Hierdurch wird eine Rückführung des Kolbens in seine Mittelstellung ermöglicht.

Die EP 0 334 723 A1 zeigt einen doppeltwirkenden Hydraulikzylinder zum Einsatz in der Lenkvorrichtung eines Fahrzeuges sowie eine Hilfsschaltung, die durch die Auslenkung der Kolbenstange betätigt wird und eine Rückführung der Kolbenstange in deren Mittelstellung ermöglicht. Im Fehlerfalle wird über eine elektronische Steuerschaltung eine der Druckkammern mit der von der Hydraulikpumpe kommenden Druckleitung, die andere mit dem Tank verbunden. Zusätzliche Rückschlagventile sollen verhindern, dass im Falle eines Leitungsbruchs sich eine der Kammern über die geborstene Leitung vollständig entleeren kann.

Ferner ist in der Druckschrift WO 95/29087 A1 ein Lenkzylinder einer Mehrachslenkanlage offenbart, der als Geberzylinder eingesetzt wird. An diesem Lenkzylinder ist eine Einrichtung zum automatischen Synchronisieren der Bewegungen des Geberzylinders und des Nehmerzylinders vorgesehen, durch die in der Geradeaus-Stellung und in einem daran angrenzenden kleinen Lenkwinkel-Bereich eine Verbindung nur zwischen den beiden Räumen des Geberzylinders herstellbar ist und außerhalb dieses Bereichs die beiden Räume des Geberzylinders voneinander getrennt sind. Damit ist das Synchronisieren auf die Geradeausfahrt-Stellung und einen daran angrenzenden kleinen Lenkwinkel-Bereich beschränkt.

### Darstellung der vorliegenden Erfindung: Aufgabe, Lösung, Vorteile

Ausgehend von den vorstehend dargelegten Nachteilen und Unzulänglichkeiten sowie unter Würdigung des umrissenen Stands der Technik liegt der vorliegenden Erfindung die Aufgabe zugrunde, eine hydrostatische Stellschaltung gemäß dem Oberbegriff des Anspruchs 1 so weiterzubilden, dass nur sehr wenige Komponenten erforderlich sind und die Lenkung im Fehlerfall in die Mittelstellung gebracht werden kann, ohne das System mit Energie versorgen zu müssen.

Diese Aufgabe wird bei einer hydrostatischen Stellschaltung gemäß dem Oberbegriff des Anspruchs 1 erfindungsgemäß durch dessen kennzeichnende Merkmale gelöst.

Hierzu sind die beiden Kammern des hydraulischen Aktuators, insbesondere über Leitungen, erfindungsgemäß an eine Einrichtung angeschlossen, deren Komponenten durch Auslenkung des hydraulischen Aktuators aus seiner Mittelstellung in einen Schaltzustand versetzt werden, der einen unidirektionalen Durchfluss zwischen den beiden Kammern derart ermöglicht, dass eine Kolbenstange des hydraulischen Aktuators nur zur Mittelstellung hin bewegbar ist.

Die hydrostatische Stellschaltung gemäß der vorliegenden Erfindung verfügt über sehr wenige Komponenten und bietet den Vorteil, die Lenkung im Fehlerfall in die Mittelstellung bringen zu können, ohne dass das System mit Energie versorgt werden muss.

Vorteilhafte Ausführungsformen und zweckmäßige Weiterbildungen der vorliegenden Erfindung sind in den abhängigen Ansprüchen gekennzeichnet.

Der hydraulische Aktuator kann mit mindestens einem Positionssensor versehen sein und/oder insbesondere als Hydraulikzylinder, zum Beispiel als doppeltwirkender Hydraulikzylinder, wie etwa als Lenkzylinder oder als Lenkzentrierzylinder, ausgebildet sein, vorzugsweise in der Ausführung als Gleichlaufzylinder. Das Stellelement, insbesondere Trennorgan, des hydraulischen Aktuators kann in bevorzugter Weise ein Kolben sein.

Gemäß einer vorteilhaften Ausführungsform der vorliegenden Erfindung kann die Einrichtung mindestens ein, insbesondere elektromagnetisch ansteuerbares und/oder insbesondere in seiner Sperr- oder Schließstellung sitzdicht ausgeführtes, Wegeventil aufweisen, das
- in einer seiner Betriebsstellungen die Verbindung zwischen den beiden Kammern sperrt oder schließt und
- in einer anderen seiner Betriebsstellungen, insbesondere aufgrund der Kraft mindestens einer Feder, in eine offene Stellung schaltbar ist.

In einer zweckmäßigen Weiterbildung der vorliegenden Erfindung weist die Einrichtung mindestens zwei, insbesondere schaltungstechnisch spiegelbildlich zueinander angeordnete, Rückschlagventile auf, die jeweils mit einer, insbesondere mechanisch betätigbaren, Entsperreinrichtung versehen sein können.

Gemäß einer bevorzugten Ausgestaltungsform der vorliegenden Erfindung ist die Kolbenstange abschnitts- und/oder bereichsweise umgestaltet, insbesondere in ihrem Durchmesser abgestuft. Durch diese umgestaltete Kolbenstange kann die Entsperreinrichtung betätigbar sein; insbesondere kann die Entsperreinrichtung des den Durchfluss von der gegenüber der Mittelstellung des hydraulischen Aktuators ausgedehnten Kammer zur gegenüber der Mittelstellung des hydraulischen Aktuators kontrahierten Kammer sperrenden Rückschlagventils durch den umgestalteten Abschnitt und/oder Bereich der Kolbenstange außerhalb der Mittelstellung des hydraulischen Aktuators betätigbar sein.

In der Mittelstellung des hydraulischen Aktuators sowie in unmittelbarer Nähe der Mittelstellung des hydraulischen Aktuators bleibt die jeweilige Entsperreinrichtung der beiden Rückschlagventile durch den bereichsweise umgestalteten Abschnitt der Kolbenstange sowie durch die Anordnung der Entsperreinrichtungen gegenüber dem umgestalteten Abschnitt der Kolbenstange vorzugsweise unbetätigt.

Die vorliegende Erfindung betrifft schließlich die Verwendung mindestens einer Stellschaltung gemäß der vorstehend dargelegten Art als Hilfslenkung für Nutzfahrzeuge.

### Kurze Beschreibung der Zeichnungen

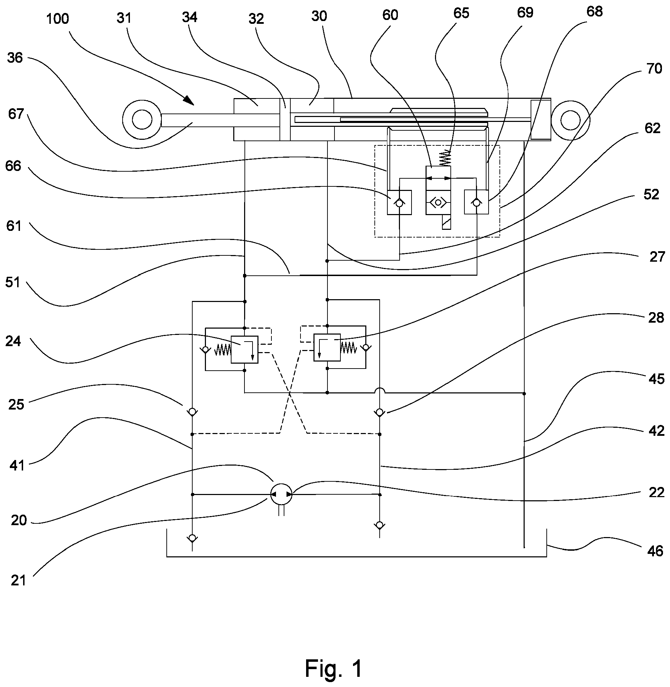

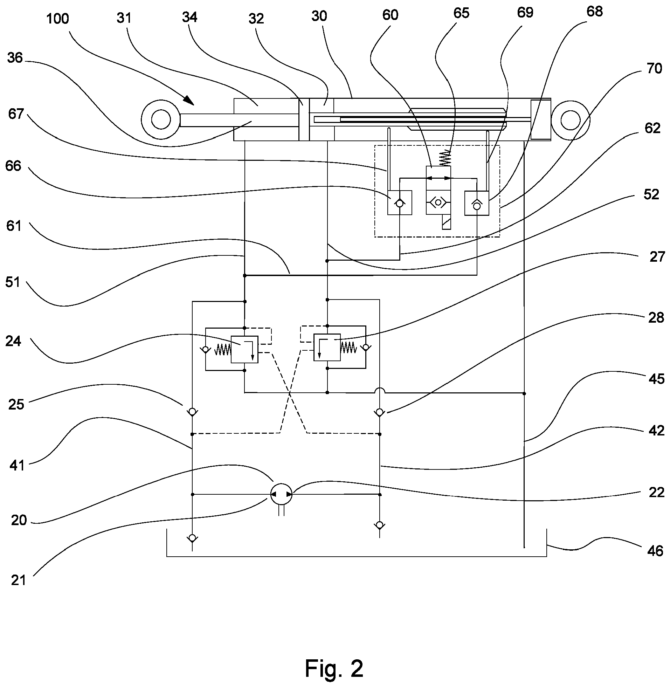

Wie bereits vorstehend erörtert, gibt es verschiedene Möglichkeiten, die Lehre der vorliegenden Erfindung in vorteilhafter Weise auszugestalten und weiterzubilden. Hierzu werden weitere Ausgestaltungen, Merkmale und Vorteile der vorliegenden Erfindung nachstehend anhand des durch Fig. 1 und Fig. 2 veranschaulichten Ausführungsbeispiels näher erläutert.

Es zeigt:
- Fig. 1: in schematischer Ansicht ein Ausführungsbeispiel einer Stellschaltung gemäß der vorliegenden Erfindung in der Mittelstellung der Kolbenstange; und
- Fig. 2: in schematischer Ansicht die Stellschaltung aus Fig. 1 in ausgelenkter Stellung der Kolbenstange.

Gleiche oder ähnliche Ausgestaltungen, Elemente oder Merkmale sind in Fig. 1 und in Fig. 2 mit identischen Bezugszeichen versehen. Die Dimensionierung der einzelnen Elemente oder Merkmale, insbesondere in Relation zueinander, ist in Fig. 1 und in Fig. 2 rein exemplarisch und nicht notwendigerweise maßstabsgerecht.

### Bester Weg zur Ausführung der vorliegenden Erfindung

Die vereinfachte hydrostatische Stellschaltung 100 nach Fig. 1 und Fig. 2 weist eine, insbesondere gesteuerte und/oder insbesondere reversierbare, Hydraulikpumpe 20 auf.

Die Hydraulikpumpe 20 weist zwei Anschlüsse 21, 22 auf, von denen jeder Anschluss 21 bzw. 22 über Verbindungsleitungen 41, 42 bzw. 51, 52 zu einer von zwei Kammern 31 bzw. 32 eines ein Stellelement 34 aufweisenden, als doppeltwirkender Lenkzentrierzylinder fungierenden hydraulischen Aktuators 30 führt.

Die beiden Kammern 31, 32 weisen vorzugsweise gleiche wirksame Flächen auf.

Zwischen jedem der beiden Anschlüsse 21 bzw. 22 und der dem jeweiligen Anschluss 21 bzw. 22 zugeordneten Kammer 31 bzw. 32 ist ein Rückschlagventil 25 bzw. 28 angeordnet.

Erfindungsgemäß sind die beiden Kammern 31 bzw. 32 über Leitungen 61 bzw. 62 an eine Einrichtung 70 angeschlossen. Die Einrichtung 70 weist ein, insbesondere elektromagnetisch ansteuerbares, Wegeventil 60 auf, das in seiner einen Betriebsstellung sperrt oder schließt und in seiner anderen Betriebsstellung, insbesondere aufgrund der Kraft einer Feder 65, öffnet.

Das Wegeventil 60 ist in seiner Sperr- oder Schließstellung vorzugsweise sitzdicht ausgeführt.

Wie der Darstellung in Fig. 1 und Fig. 2 des Weiteren entnehmbar, weist die Einrichtung 70 zwei schaltungstechnisch spiegelbildlich zueinander angeordnete Rückschlagventile 66 bzw. 68 mit jeweiliger Entsperreinrichtung 67 bzw. 69 auf. Die jeweilige Entsperreinrichtung 67 bzw. 69 ist mechanisch betätigbar, insbesondere durch die bereichsweise umgestaltete Kolbenstange 36.

Im normalen Betrieb der Schaltung 100, insbesondere bei Verwendung als Hilfslenkung für Nutzfahrzeuge, ist die Magnetspule des Wegeventils 60 aktiviert, wodurch sein Schaltglied gegen die Kraft der Feder 65 in Sperrstellung schaltet und dadurch die Einrichtung 70 unabhängig von
- der Stellung der Kolbenstange 36,
- den gegebenenfalls betätigten Entsperreinrichtungen 67 bzw. 69 und
- dadurch zustande gekommenen Schaltzuständen der beiden Rückschlagventile 66 bzw. 68 die Verbindung zwischen den beiden Kammern 31 bzw. 32 des hydraulischen Aktuators 30 über die Verbindungsleitungen 51, 61 bzw. 52, 62 sperrt oder schließt.

Nach der einen Ansteuerung der Hydraulikpumpe 20 wird ein bestimmter Volumenstrom an Hydraulikflüssigkeit von dem einen, als Druckanschluss wirkenden Anschluss 21 über
- einen ersten Abschnitt 41 einer ersten Verbindungsleitung,
- das erste Rückschlagventil 25 und
- einen zweiten Abschnitt 51 der ersten Verbindungsleitung
   unter Verschiebung des Stellelements 34 in die eine Kammer 31 geleitet. Der Druck, der dabei aufgebaut wird, um die Gegenkraft des Lenksystems zu überwinden, steuert das gegenüber liegende Druckventil 27 an.

Hierbei wird Hydraulikflüssigkeit aus der anderen Kammer 32 über
- einen zweiten Abschnitt 52 einer zweiten Verbindungsleitung,
- das vom zufließenden Volumenstrom angesteuerte zweite Druckventil 27 und
- die Tankleitung 45
   zum Tank 46 verdrängt.

Während des oben beschriebenen Ablaufs wird die Kolbenstange 36 des Lenkzylinders 30 eingefahren. Beim Ausfahren der Kolbenstange 36 wird die Hydraulikpumpe 20 derart angesteuert, dass ein bestimmter Volumenstrom an Hydraulikflüssigkeit vom anderen, als Druckanschluss wirkenden Anschluss 22 der Hydraulikpumpe 20 über den ersten Abschnitt 42 der anderen Verbindungsleitung an die Schaltung 100 weitergeleitet wird (durch die symmetrische Ausgestaltung der Schaltung 100 bedarf der Funktionsablauf keiner weiteren besonderen Beschreibung).

Im Falle einer Fehlfunktion des Lenksystems wird die Magnetspule des Wegeventils 60 deaktiviert, wodurch sein Schaltglied durch die Kraft der Feder 65 in die offene Stellung geschaltet wird, so dass der Schaltzustand der Einrichtung 70 durch den Schaltzustand der beiden mit dem Wegeventil 60 in Reihe geschalteten, spiegelbildlich zueinander angeordneten Rückschlagventile 66, 68 bestimmt wird.

In der Mittelstellung des hydraulischen Aktuators 30 oder in unmittelbarer Nähe der Mittelstellung des hydraulischen Aktuators 30 bleiben die Entsperreinrichtungen 67, 69 der Rückschlagventile 66, 68 unbetätigt und folglich die Rückschlagventile 66, 68 gesperrt. Demzufolge verbleibt die Kolbenstange 36, unabhängig von den auf den hydraulischen Aktuator 30 wirkenden Kräften dauerhaft in ihrer Mittelstellung.

In einer gegenüber der Mittelstellung des hydraulischen Aktuators 30 ausgelenkten Stellung der Kolbenstange 36, wie beispielsweise in Fig. 2 dargestellt, wird die Entsperreinrichtung 69 des den Durchfluss von der gegenüber der Mittelstellung des hydraulischen Aktuators 30 ausgedehnten Kammer 31 zur gegenüber der Mittelstellung des hydraulischen Aktuators 30 kontrahierten Kammer 32 sperrenden zweiten Rückschlagventils 68 durch den umgestalteten Bereich der Kolbenstange 36 betätigt und folglich der Durchfluss von der ausgedehnten Kammer 31 zur kontrahierten Kammer 32 ermöglicht.

Dieser Durchfluss findet unter Einwirkung der auf den hydraulischen Aktuator 30 in Richtung seiner Mittelstellung wirkenden äußeren Kräfte statt, bis der hydraulische Aktuator 30 seine Mittelstellung erreicht hat. Die in Richtung der vergrößernden Auslenkung wirkenden äußeren Kräfte bewirken hierbei keine Veränderung der Lage der Kolbenstange 36, denn das dem Durchfluss von der kontrahierten Kammer 32 zur ausgedehnten Kammer 31 zugeordnete erste Rückschlagventil 66, dessen Betätigungseinrichtung 67 in diesem Zustand durch den umgestalteten Abschnitt und/oder Bereich der Kolbenstange 36 unbetätigt bleibt, sperrt weiterhin.

Somit steht durch die Einrichtung 70 eine unidirektionale Verbindung zwischen den beiden Kammern 31, 32 derart zur Verfügung, dass bei Auslenkung des hydraulischen Aktuators 30 aus seiner Mittelstellung die Kolbenstange 36 nur zur Mittelstellung hin bewegbar ist. Auf diese Weise wird sichergestellt, dass der hydraulische Aktuator 30, insbesondere der Lenkzylinder oder Lenkzentrierzylinder, im Fehlerfall durch die Einwirkung äußerer Kräfte in seine Mittelstellung gebracht wird und anschließend in dieser Mittelstellung verweilt.

In einer gegenüber der Mittelstellung des hydraulischen Aktuators 30 in Bezug auf Fig. 2 in die Gegenrichtung ausgelenkten Stellung der Kolbenstange 36 wird die Entsperreinrichtung 67 des den Durchfluss von der gegenüber der Mittelstellung des hydraulischen Aktuators 30 ausgedehnten Kammer 32 zur gegenüber der Mittelstellung des hydraulischen Aktuators 30 kontrahierten Kammer 31 sperrenden zweiten Rückschlagventils 66 durch den umgestalteten Bereich der Kolbenstange 36 betätigt und folglich der Durchfluss von der ausgedehnten Kammer 32 zur kontrahierten Kammer 31 ermöglicht (durch die symmetrische Ausgestaltung der Schaltung 100 bedarf der Funktionsablauf keiner weiteren besonderen Beschreibung).

Ferner kann der Lenkzylinder oder Lenkzentrierzylinder 30 mit einem Positionssensor ausgestattet sein.

Die anhand Fig. 1 und Fig. 2 veranschaulichte hydrostatische Stellschaltung 100 eignet sich erfindungsgemäß als Hilfslenkung für Nutzfahrzeuge.

### Bezugszeichenliste

- 100: hydrostatische Stellschaltung
- 20: Hydraulikpumpe, insbesondere reversierbare Hydraulikpumpe
- 21: erster Anschluss der Hydraulikpumpe 20
- 22: anderer oder zweiter Anschluss, insbesondere anderer oder zweiter Druckanschluss, der Hydraulikpumpe 20
- 24: Druckventil, insbesondere Druckregelventil, zum Beispiel hydraulisch ansteuerbares Druckventil, zwischen erster Kammer 31 und Tank 46
- 25: Rückschlagventil zwischen erstem Anschluss 21 und erster Kammer 31
- 27: Druckventil, insbesondere Druckregelventil, zum Beispiel hydraulisch ansteuerbares Druckventil, zwischen anderer oder zweiter Kammer 32 und Tank 46
- 28: Rückschlagventil zwischen anderem oder zweitem Anschluss 22 und zweiter Kammer 32
- 30: hydraulischer Aktuator, insbesondere Hydraulikzylinder, zum Beispiel doppeltwirkender Hydraulikzylinder, wie etwa Lenkzylinder oder Lenkzentrierzylinder, zum Beispiel in der Ausführung als Gleichlaufzylinder oder als Differentialzylinder
- 31: erste Kammer des hydraulischen Aktuators 30
- 32: andere oder zweite Kammer des hydraulischen Aktuators 30
- 34: Stellelement, insbesondere Trennorgan, zum Beispiel Kolben, des hydraulischen Aktuators 30
- 36: Kolbenstange
- 41: erster Abschnitt der ersten Verbindungsleitung
- 42: erster Abschnitt der anderen oder zweiten Verbindungsleitung
- 45: Tankleitung
- 46: Tank
- 51: anderer oder zweiter Abschnitt der ersten Verbindungsleitung
- 52: anderer oder zweiter Abschnitt der anderen oder zweiten Verbindungsleitung
- 60: Wegeventil
- 61: erste Leitung
- 62: zweite Leitung
- 65: Feder
- 66: erstes Rückschlagventil
- 67: Betätigungseinrichtung oder Entsperreinrichtung des ersten Rückschlagventils 66
- 68: anderes oder zweites Rückschlagventil
- 69: Betätigungseinrichtung oder Entsperreinrichtung des anderen oder zweiten Rückschlagventils 68
- 70: Einrichtung

## Patentansprüche

1. Hydrostatische Stellschaltung (100), insbesondere als Hilfslenkung in Nutzfahrzeugen, aufweisend eine zwei Anschlüsse (21, 22) aufweisende, insbesondere reversierbare, Hydraulikpumpe (20), von denen jeder Anschluss (21, 22) über Verbindungsleitungen (41, 42, 51, 52) zu einer von zwei Kammern (31, 32) mindestens eines ein Stellelement (34) aufweisenden hydraulischen Aktuators (30) führt,
- wobei zwischen jedem der beiden Anschlüsse (21, 22) und der dem jeweiligen Anschluss (21, 22) zugeordneten Kammer (31, 32) ein Rückschlagventil (25, 28) angeordnet ist und
- wobei nach der einen Ansteuerung der Hydraulikpumpe (20) ein bestimmter Volumenstrom an Hydraulikflüssigkeit von dem einen, als Druckanschluss wirkenden Anschluss (21) über
- einen ersten Abschnitt (41) einer ersten Verbindungsleitung,
- das erste Rückschlagventil (25) und
- einen zweiten Abschnitt (51) der ersten Verbindungsleitung unter Verschiebung des Stellelements (34) in die eine Kammer (31) geleitet und dabei Hydraulikflüssigkeit aus der anderen Kammer (32) über
- einen zweiten Abschnitt (52) einer zweiten Verbindungsleitung,
- ein vom zufließenden Volumenstrom in Regelstellung gebrachtes Druckventil (27) und
- eine Tankleitung (45)
zu einem Tank (46) verdrängt wird,
- wobei die beiden Kammern (31, 32) im Wesentlichen gleiche wirksame Flächen aufweisen,
**dadurch gekennzeichnet,**
**dass** die beiden Kammern (31, 32), insbesondere über Leitungen (61, 62), an eine Einrichtung (70) angeschlossen sind, deren Komponenten durch Auslenkung des hydraulischen Aktuators (30) aus seiner Mittelstellung in einen Schaltzustand versetzt werden, der einen unidirektionalen Durchfluss zwischen den beiden Kammern (31, 32) derart ermöglicht, dass eine Kolbenstange (36) des hydraulischen Aktuators (30) nur zur Mittelstellung hin bewegbar ist.

2. Stellschaltung gemäß Anspruch 1, **dadurch gekennzeichnet, dass** die Einrichtung (70) mindestens ein, insbesondere elektromagnetisch ansteuerbares, Wegeventil (60) aufweist, das
- in einer seiner Betriebsstellungen, insbesondere in sitzdichter Ausführung, die Verbindung zwischen den beiden Kammern (31, 32) sperrt oder schließt und
- in einer anderen seiner Betriebsstellungen, insbesondere aufgrund der Kraft mindestens einer Feder (65), in eine offene Stellung schaltbar ist.

3. Stellschaltung gemäß Anspruch 1 oder 2, **dadurch gekennzeichnet, dass** die Einrichtung (70) mindestens zwei, insbesondere schaltungstechnisch spiegelbildlich zueinander angeordnete, Rückschlagventile (66, 68) aufweist.

4. Stellschaltung gemäß Anspruch 3, **dadurch gekennzeichnet, dass** die Rückschlagventile (66 bzw. 68) jeweils mit einer, insbesondere mechanisch betätigbaren, Entsperreinrichtung (67 bzw. 69) versehen sind.

5. Stellschaltung gemäß mindestens einem der Ansprüche 1 bis 4, **dadurch gekennzeichnet, dass** die Kolbenstange (36) abschnitts- und/oder bereichsweise umgestaltet, insbesondere in ihrem Durchmesser abgestuft, ist.

6. Stellschaltung gemäß Anspruch 4 und 5, **dadurch gekennzeichnet, dass** die Entsperreinrichtung (67, 69) in der Mittelstellung des hydraulischen Aktuators (30) sowie in unmittelbarer Nähe der Mittelstellung des hydraulischen Aktuators (30) durch den umgestalteten Abschnitt und/oder Bereich der Kolbenstange (36) unbetätigt bleibt.

7. Stellschaltung gemäß Anspruch 4 und 5 oder gemäß Anspruch 6, **dadurch gekennzeichnet, dass** die Entsperreinrichtung (67, 69) durch die abschnitts- und/oder bereichsweise umgestaltete Kolbenstange (36) betätigbar ist.

8. Stellschaltung gemäß Anspruch 7, **dadurch gekennzeichnet, dass** die Entsperreinrichtung (67 bzw. 69) des den Durchfluss von der gegenüber der Mittelstellung des hydraulischen Aktuators (30) ausgedehnten Kammer (31 bzw. 32) zur gegenüber der Mittelstellung des hydraulischen Aktuators (30) kontrahierten Kammer (32 bzw. 31) sperrenden Rückschlagventils (66 bzw. 68) durch den umgestalteten Abschnitt und/oder Bereich der Kolbenstange (36) außerhalb der Mittelstellung des hydraulischen Aktuators (30) betätigbar ist.

9. Stellschaltung gemäß mindestens einem der Ansprüche 1 bis 8, **dadurch gekennzeichnet, dass** der hydraulische Aktuator (30) mit mindestens einem Positionssensor versehen ist.

10. Verwendung mindestens einer Stellschaltung (100) gemäß mindestens einem der Ansprüche 1 bis 9 als Hilfslenkung für Nutzfahrzeuge.

## Claims

1. Hydrostatic control circuit (100), especially as a power-assisted steering system in commercial vehicles, having a hydraulic pump (20), especially a reversible hydraulic pump, having two ports (21, 22), each of which ports (21, 22) leads via connecting lines (41, 42, 51, 52) to one of two chambers (31, 32) of at least one hydraulic actuator (30) having a control element (34),
- wherein a check valve (25, 28) is arranged between each of the two ports (21, 22) and the chamber (31, 32) associated with the respective port (21, 22) and
- wherein after one activation of the hydraulic pump (20) a defined flow of hydraulic fluid is conducted from the one port (21), which acts as pressure port, via
- a first section (41) of a first connecting line,
- the first check valve (25) and
- a second section (51) of the first connecting line,
to the one chamber (31), with the control element (34) being displaced, and at the same time hydraulic fluid is forced out of the other chamber (32) via
- a second section (52) of a second connecting line,
- a pressure valve (27), which is moved into the regulating position by the incoming flow, and
- a tank line (45),
into a tank (46),
- wherein the two chambers (31, 32) have substantially identical effective surface areas,
**characterised in that**
the two chambers (31, 32) are connected, especially via lines (61, 62), to a device (70) the components of which are moved into a switching state as a result of displacement of the hydraulic actuator (30) out of its centre position, which switching state allows a unidirectional flow between the two chambers (31, 32) in such a way that a piston rod (36) of the hydraulic actuator (30) is movable only towards the centre position.

2. Control circuit according to claim 1, **characterised in that** the device (70) has at least one directional control valve (60), especially an electromagnetically actuatable directional control valve, which
- in one of its operating positions, especially in a leakproof design, blocks or closes the connection between the two chambers (31, 32) and
- in another of its operating positions is switchable into an open position, especially as a result of the force of at least one spring (65).

3. Control circuit according to claim 1 or 2, **characterised in that** the device (70) has at least two check valves (66, 68), which are especially arranged as mirror images of one another in the circuit.

4. Control circuit according to claim 3, **characterised in that** the check valves (66, 68) are each provided with an unblocking device (67, 69, respectively), especially a mechanically operable unblocking device.

5. Control circuit according to at least one of claims 1 to 4, **characterised in that** the piston rod (36) is modified in some sections and/or in some regions, especially stepped in its diameter.

6. Control circuit according to claim 4 and 5, **characterised in that** in the centre position of the hydraulic actuator (30) as well as in the immediate vicinity of the centre position of the hydraulic actuator (30) the unblocking device (67, 69) remains unoperated by the modified section and/or region of the piston rod (36).

7. Control circuit according to claim 4 and 5 or according to claim 6, **characterised in that** the unblocking device (67, 69) is operable by the piston rod (36) which has been modified in some sections and/or in some regions.

8. Control circuit according to claim 7, **characterised in that** the unblocking device (67, 69) of the check valve (66, 68) blocking the flow from the chamber (31, 32) that is extended with respect to the centre position of the hydraulic actuator (30) to the chamber (32, 31, respectively) that is contracted with respect to the centre position of the hydraulic actuator (30) is operable by the modified section and/or region of the piston rod (36) outside the centre position of the hydraulic actuator (30).

9. Control circuit according to at least one of claims 1 to 8, **characterised in that** the hydraulic actuator (30) is provided with at least one position sensor.

10. Use of at least one control circuit (100) according to at least one of claims 1 to 9 as a power-assisted steering system for commercial vehicles.

## Revendications

1. Circuit de commande hydrostatique (100) remplissant notamment la fonction d'une direction auxiliaire dans des véhicules utilitaires, muni d'une pompe hydraulique (20) notamment réversible, comprenant deux raccords (21, 22) au sein desquels chaque raccord (21, 22) mène, par l'intermédiaire de conduits de liaison (41, 42, 51, 52), à l'une de deux chambres (31, 32) d'au moins un actionneur hydraulique (30) doté d'un élément de manœuvre (34),
- sachant qu'un clapet antiretour (25, 26) est interposé entre chacun des deux raccords (21, 22) et la chambre (31, 32) associée au raccord (21, 22) considéré,
- sachant qu'à l'issue de l'un des pilotages de la pompe hydraulique (20), un flux volumique déterminé de fluide hydraulique est canalisé vers l'une (31) des chambres à partir de l'un (21) des raccords agissant comme un raccord de pression, en transitant
- par un premier tronçon (41) d'un premier conduit de liaison,
- par le premier clapet antiretour (25) et
- par un second tronçon (51) dudit premier conduit de liaison,
avec déplacement dudit élément de manœuvre (34),
du fluide hydraulique étant alors refoulé vers un réservoir (46) à partir de l'autre chambre (32), en transitant
- par un second tronçon (52) d'un second conduit de liaison,
- par une soupape de pression (27), mise en position de régulation par le flux volumique d'entrée, et
- par un conduit (45) de réservoir,
- sachant que les deux chambres (31, 32) présentent, pour l'essentiel, des surfaces opérantes identiques,
**caractérisé par le fait**
**que** les deux chambres (31, 32) sont raccordées, en particulier par l'intermédiaire de conduits (61, 62), à un dispositif (70) dont les éléments constitutifs sont transposés, par déviation de l'actionneur hydraulique (30) lui faisant quitter sa position médiane, à un état de commutation autorisant un écoulement unidirectionnel, entre les deux chambres (31, 32), de façon telle que la tige (36) d'un piston dudit actionneur hydraulique (30) soit mobile uniquement en direction de ladite position médiane.

2. Circuit de commande selon la revendication 1, **caractérisé par le fait que** le dispositif (70) est équipé d'au moins une vanne de distribution (60) qui peut être, en particulier, pilotée électromagnétiquement et qui,
- dans l'une de ses positions fonctionnelles, notamment dans une réalisation à siège étanche, bloque ou ferme la liaison entre les deux chambres (31, 32) et,
- dans une autre de ses positions fonctionnelles, peut être commutée à une position ouverte, en particulier sous l'action de la force d'au moins un ressort (65).

3. Circuit de commande selon la revendication 1 ou 2, **caractérisé par le fait que** le dispositif (70) comprend au moins deux clapets antiretour (66, 68) dont les branchements sont techniquement agencés, en particulier, avec disposition spéculaire.

4. Circuit de commande selon la revendication 3, **caractérisé par le fait que** les clapets antiretour (66, respectivement 68) sont munis, à chaque fois, d'un dispositif de déblocage (67, respectivement 69) notamment actionnable en mode mécanique.

5. Circuit de commande selon au moins l'une des revendications 1 à 4, **caractérisé par le fait que** la tige (36) du piston présente un profil remanié par tronçons et/ou par zones, en particulier un diamètre étagé.

6. Circuit de commande selon les revendications 4 et 5, **caractérisé par le fait que**, dans la position médiane de l'actionneur hydraulique (30), ainsi qu'à proximité immédiate de ladite position médiane de l'actionneur hydraulique (30), le dispositif de déblocage (67, 69) demeure non actionné par le tronçon et/ou la zone à profil remanié de la tige (36) du piston.

7. Circuit de commande selon les revendications 4 et 5 ou selon la revendication 6, **caractérisé par le fait que** le dispositif de déblocage (67, 69) peut être actionné par la tige (36) du piston, dotée d'un profil remanié par tronçons et/ou par zones.

8. Circuit de commande selon la revendication 7, **caractérisé par le fait que** le dispositif de déblocage (67, respectivement 69) du clapet antiretour (66, respectivement 68), bloquant l'écoulement s'opérant à partir de la chambre (31, respectivement 32) déployée par rapport à la position médiane de l'actionneur hydraulique (30), vers la chambre (32, respectivement 31) contractée par rapport à ladite position médiane de l'actionneur hydraulique (30), peut être actionné par le tronçon et/ou la zone à profil remanié de la tige (36) du piston, en dehors de ladite position médiane de l'actionneur hydraulique (30).

9. Circuit de commande selon au moins l'une des revendications 1 à 8, **caractérisé par le fait que** l'actionneur hydraulique (30) est pourvu d'au moins un capteur d'emplacements.

10. Utilisation d'au moins un circuit de commande (100) conforme à au moins l'une des revendications 1 à 9, en tant que direction auxiliaire pour véhicules utilitaires.
